# EUROPÄISCHE PATENTSCHRIFT

(11) **EP 3 948 343 B1**
(45) Veröffentlichungstag und Bekanntmachung des Hinweises auf die Patenterteilung: **11.03.2026**
(21) Anmeldenummer: 20715862.7
(22) Anmeldetag: 30.03.2020
(51) Int. Cl.: G01S 13/88, H01Q 1/22, H01Q 3/02

(54) **RADARMESSGERÄT MIT INTEGRIERTER SICHERHEITSBEREICHSÜBERWACHUNG**
RADAR MEASUREMENT APPARATUS WITH INTEGRATED SAFETY ZONE MONITORING
APPAREIL DE MESURE PAR RADAR AVEC SURVEILLANCE INTÉGRÉE DE PÉRIMÈTRE

(30) Priorität: 05.04.2019 DE 102019204881
(43) Veröffentlichungstag der Anmeldung: 09.02.2022
(73) Patentinhaber: VEGA Grieshaber KG, 77709 Wolfach (DE)
(72) Erfinder: ALLGAIER, Stefan, 77709 Oberwolfach (DE); HEIZMANN, Patrick, 77709 Oberwolfach (DE); SUM, Manfred, 77773 Schenkenzell (DE); SUM, Stefan, 77709 Wolfach (DE)
(74) Vertreter: Maiwald GmbH
(86) Internationale Anmeldenummer: PCT/EP2020/058985
(87) Internationale Veröffentlichungsnummer: WO 2020/201223

(56) Entgegenhaltungen:
- EP-A1- 3 309 523
- WO-A1-2015/124201
- DE-A1- 102014 109 402

## Beschreibung

Die vorliegende Anmeldung beansprucht die Priorität der deutschen Patentanmeldung Nr. 10 2019 204 881.1, eingereicht am 5. April 2019, die in vollem Umfang durch Bezugnahme in das vorliegende Dokument aufgenommen wird.

### Gebiet der Erfindung

Die Erfindung betrifft die Radarmesstechnik. Insbesondere betrifft die Erfindung ein Radarmessgerät, eingerichtet zur Prozessautomatisierung im industriellen Umfeld und mit integrierter Sicherheitsbereichsüberwachung, die Verwendung eines derartigen Radarmessgeräts zur Objektüberwachung auf z.B. einem Förderband, ein Verfahren zur Prozessautomatisierung, wie der Gebäude- und Fabrikautomatisierung, ein Programmelement und ein computerlesbares Medium.

### Hintergrund

Radarmessgeräte können in der Prozessautomatisierung im industriellen Umfeld eingesetzt werden. Typische Anwendungen sind Füllstandmessung, Grenzstanderfassung, Höhen- und Volumenmessungen von Füll-/Schüttgütern und Oberflächentopologiemessungen.

Insbesondere bei der Schüttgutüberwachung kann es vorteilhaft sein, einen Sicherheitsbereich um das Füll-/Schüttgut herum zu überwachen. Dies erfolgt unter Verwendung von Sicherheitsbereichsüberwachungssensoren.

DE 10 2014 109402 A1 beschreibt einen Sensor für eine Rollenbahn mit einem Sender, einem Empfänger und einem Sensorelement mit einem Antennenelement, das in eine Rolle der Rollenbahn integriert und zwischen Rollen der Rollenbahn oder an der Rollenbahn angeordnet ist, und mit einer Auswertungseinheit zum Erkennen von auf der Rollenbahn befindlichen Objekten anhand eines Sensorsignals des Sensorelements.

EP 3 309 523 A1 beschreibt ein Füllstandmessgerät zum Bestimmen einer Topologie einer Füllgutoberfläche, das eine Antennenanordnung mit wenigstens drei Antenneneinrichtungen zum Senden und Empfangen eines Radarsignals und eine Steuereinheit aufweist.

WO 2015/124201 A1 beschreibt ein Füllstandmessgerät zur Erfassung einer Topologie einer Füllgutoberfläche, welches eine rotierende Antennenvorrichtung aufweist. Die Antennenvorrichtung umfasst eine Antenneneinheit mit einem Array an Strahlerelementen zum Abstrahlen und Empfangen eines Messsignals, eine Antriebsachse zum Rotieren der Antenneneinheit und einen ersten Energiespeicher zur Versorgung der Antennenvorrichtung mit der für deren Betrieb erforderlichen elektrischen Energie.

### Zusammenfassung

Es ist eine Aufgabe der Erfindung, eine effiziente Prozessautomatisierung im industriellen Umfeld bereitzustellen.

Diese Aufgabe wird durch die Gegenstände der unabhängigen Patentansprüche gelöst. Weiterbildungen der Erfindung ergeben sich aus den Unteransprüchen und der folgenden Beschreibung von Ausführungsformen.

Ein erster Aspekt der Erfindung betrifft ein Radarmessgerät mit den technischen Merkmalen des Anspruchs 1, eingerichtet zur Prozessautomatisierung im industriellen Umfeld mit integrierter Sicherheitsbereichsüberwachung. Das Radarmessgerät weist eine Radarsignalquelle auf, die eingerichtet ist zum Erzeugen und Abstrahlen eines Radar-Sendesignals in Richtung eines zu überwachenden Objekts, so dass das Objekt und auch ein Sicherheitsbereich, der sich um das Objekt herum erstreckt, bestrahlt wird. Eine Fläche außerhalb des Sicherheitsbereichs soll nach Möglichkeit nicht bestrahlt werden.

Es ist eine Auswerteeinheit vorgesehen, die eingerichtet ist zum Auswerten des von dem Objekt und dem Sicherheitsbereich reflektierten und von dem Radarmessgerät empfangenen Radar-Sendesignals. Darüber hinaus weist das Radarmessgerät eine Steuerung auf, beispielsweise in Form einer elektronischen Steuerschaltung, gegebenenfalls in Kombination mit mechanischen Komponenten, die eingerichtet ist zum Einstellen der Richtung des abgestrahlten Radar-Sendesignals derart, dass der Sicherheitsbereich um das Objekt herum und auch bei einer Bewegung des Objekts vollständig bestrahlt wird, so dass er vollumfänglich überwacht werden kann.

Bei dem Sicherheitsbereich kann es sich insbesondere um einen Bereich handeln, der nicht von Personen oder anderen Objekten betreten werden soll, oder, allgemeiner, um einen Bereich, in dem eine zusätzliche Objekterkennung oder Objektbewegungserkennung erfolgen soll. Die Auswerteeinheit kann so konfiguriert sein, dass sie in der Lage ist, eine Objekterkennung oder Objektbewegungserkennung im Sicherheitsbereich vorzunehmen. Ein Anwendungsbeispiel ist die Überwachung eines Förderbandes oder eines Fertigungsroboters. Detektiert das Radarmessgerät ein Objekt im Sicherheitsbereich, kann vorgesehen sein, dass das Fließband angehalten wird oder der Roboter gestoppt oder anderweitig gesteuert wird, damit es nicht zu einem Zusammenstoß kommt.

Unter dem Begriff "Prozessautomatisierung im industriellen Umfeld" kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen wie z.B. Chemie, Lebensmittel, Pharma, Erdöl, Papier, Zement, Schifffahrt oder Bergbau usw. zu automatisieren. Dieses Gebiet umfasst auch die Gebäude- und Fabrikautomatisierung.

Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar. Üblicherweise werden daher auch im Bereich der Fabrikautomation im großen Stil Sensoren auf Basis optischer Messverfahren eingesetzt.

Gemäß einer Ausführungsform ist die Steuerung eingerichtet zum Einstellen der Richtung und darüber hinaus auch des Öffnungswinkels des abgestrahlten Radar-Sendesignals, dass der Sicherheitsbereich um das Objekt herum auch bei einer Bewegung des Objekts vollständig bestrahlt wird.

Die Steuerung ist, gemäß einer weiteren Ausführungsform, eingerichtet, durch Einstellung der Richtung und/oder des Öffnungswinkels des abgestrahlten Radar-Sendesignals zu verhindern, dass ein Bereich außerhalb des Sicherheitsbereichs bestrahlt wird. Somit kann Energie gespart werden.

Gemäß einer weiteren Ausführungsform umfasst die Bewegung des Objekts nicht nur eine Translation, also Verschiebung des Objekts, sondern auch eine Vergrößerung oder Verkleinerung des Objekts. Handelt es sich bei dem Objekt beispielsweise um ein Schüttgut, so führt eine Befüllung der Schüttguthalde oder eine Entleerung zu einer Bewegung des Schüttguts im Sinne der Erfindung.

Gemäß einer weiteren Ausführungsform handelt es sich bei dem Objekt um ein Objekt auf einem Förderband, beispielsweise ein Konsumgut, wie eine Flasche, oder ein Bauteil auf einer Fertigungsstraße.

Gemäß einer weiteren Ausführungsform weist das Radarmessgerät zum Aussenden und Empfangen des Radar-Sendesignals eine Planarantenne mit elektronischer und/oder mechanischer Strahlsteuerung auf.

Insbesondere kann das Radarmessgerät als Füllstandmessgerät oder Grenzstandsensor eingerichtet sein.

Gemäß einer weiteren Ausführungsform ist die Steuerung eingerichtet, die Richtung und/oder den Öffnungswinkel des abgestrahlten Radar-Sendesignals in Abhängigkeit von einer Geschwindigkeit des zu überwachenden Objekts einzustellen. Beispielsweise kann vorgesehen sein, dass sich der Sicherheitsbereich vergrößert, wenn sich das Objekt schneller bewegt.

Gemäß einer weiteren Ausführungsform ist die Steuerung eingerichtet, ein Förderband oder einen Roboter zu steuern, wenn ein Objekt im Sicherheitsbereich detektiert wird.

Gemäß einem weiteren Aspekt ist die Verwendung eines oben und im Folgenden beschriebenen Radarmessgeräts zur Objektüberwachung auf einem Förderband angegeben. Weitere Verwendungen umfassen: Kollisionsüberwachung um bewegten Einrichtungen wie z.B. Krane, Roboter, Förderrohre, Förderrutschen oder autonom frei fahrende bzw. geführte Einheiten sowie in und um ortsfeste Einrichtungen wie z.B. Silos, Tanks, Abwurftrichter, usw.

Ein weiterer Aspekt betrifft ein Verfahren zur Prozessautomatisierung im industriellen Umfeld mit einer Sicherheitsbereichsüberwachung. Zunächst wird ein Radar-Sendesignal erzeugt und in Richtung eines zu überwachenden Objekts derart abgestrahlt, dass das Objekt und auch ein Sicherheitsbereich, der sich um das Objekt herum erstreckt, bestrahlt wird. Danach wird das von dem Objekt und dem Sicherheitsbereich reflektierte und von **dem** Radarmessgerät empfangene Radar-Sendesignal ausgewertet, woraufhin die Richtung des abgestrahlten Radar-Sendesignals derart eingestellt wird, dass der Sicherheitsbereich um das Objekt herum auch bei einer Bewegung des Objekts vollständig bestrahlt wird, wobei das Radarmessgerät zum Aussenden und Empfangen des Radar-Sendesignals eine schwenkbare Planarantenne zur mechanischen Strahlsteuerung aufweist;wobei die Steuerung eingerichtet ist, den Sicherheitsbereich über die Neigung des Radarmessgeräts automatisch nachzuführen, wenn sich die Position des Objekts ändert.

Ein weiterer Aspekt betrifft ein Programmelement, das, wenn es auf einer Steuerung eines Radarmessgeräts ausgeführt wird, das Radarmessgerät anleitet, das oben beschriebene Verfahren durchzuführen.

Ein weiterer Aspekt betrifft ein computerlesbares Medium, auf dem das oben beschriebene Programmelement gespeichert ist.

Im Folgenden werden mit Verweis auf die Figuren Ausführungsformen der Erfindung beschrieben. Werden in der folgenden Figurenbeschreibung die gleichen Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1A zeigt ein Radarmessgerät in einer Schüttgutanwendung.
Fig. 1B zeigt das Radarmessgerät der Fig. 1A in einer Schüttgutanwendung mit größeren Schüttguthalde.
Fig. 2A zeigt ein Radarmessgerät in einer Förderbandanwendung.
Fig. 2B zeigt das Radarmessgerät der Fig. 2A nach einer Bewegung des Objekts.
Fig. 3 zeigt ein Radarmessgerät in einer weiteren Schüttgutanwendung.
Fig. 4 zeigt Komponenten eines Radarmessgeräts.
Fig. 5 zeigt ein Flussdiagramm eines Verfahrens.

### Detaillierte Beschreibung von Ausführungsformen

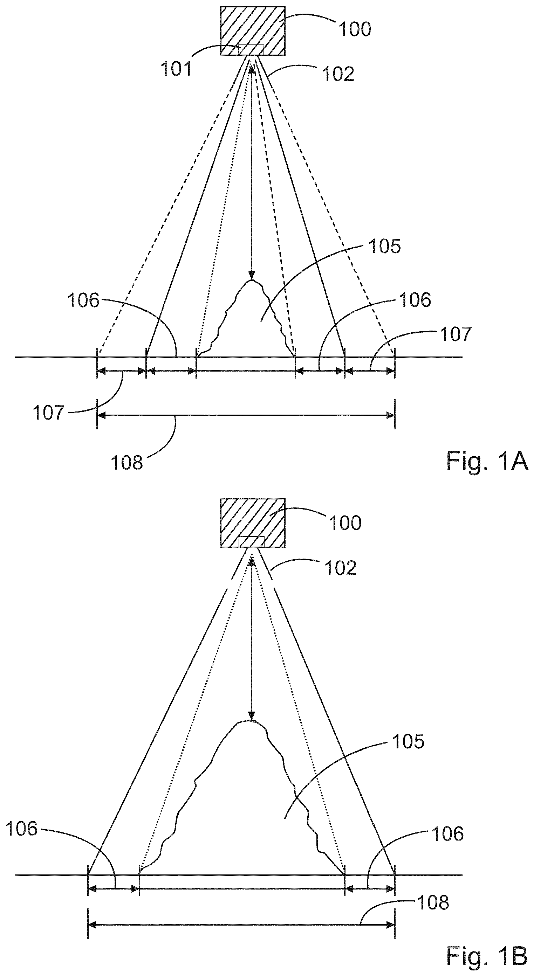

Fig. 1A zeigt ein Radarmessgerät 100 gemäß einer Ausführungsform. Das Radarmessgerät 100 weist eine Radarsignalquelle 101, 102 auf. Die Radarsignalquelle weist eine Elektronik 101 auf, die das Radar-Sendesignal erzeugt, sowie eine Antenne 102, die das Radar-Sendesignal in Richtung des zu überwachenden Objekts 105, bei dem es sich um ein Schüttgut handelt, abstrahlt.

Die Antenne 102 strahlt das Radar-Sendesignal in Richtung des Schüttguts 105 ab, so dass es nicht nur den Schüttkegel, sondern auch den Sicherheitsbereich 106, der sich um den Schüttkegel 105 herum befindet, bestrahlt. Der außerhalb des Sicherheitsbereichs 106 liegende Bereich 107 wird nicht bestrahlt, da dies nicht notwendig erscheint. Es handelt sich bei dem Bereich 107 somit um einen "ausgeblendeten Bereich", der jedoch bei anderer Einstellung der Radarsignalquelle bestrahlt werden könnte, wie dies durch die äußeren gestrichelten Linien und im Fall 108 angedeutet ist.

Bei dem dargestellten Radarmessgerät 100 handelt es sich beispielsweise um einen Radarsensor mit einer Planarantenne. Ändert sich die Ausdehnung des Mediums (Schüttgut), wird der Sicherheitsbereich entsprechend an die neue Ausdehnung des Schüttguts 105 softwaregesteuert automatisch angepasst.

Dies ist beispielsweise in Fig. 1B gezeigt, in welcher zu sehen ist, dass sich der Schüttkegel 105 aufgrund einer Befüllung vergrößert hat und der Sicherheitsbereich 106 um den Schüttkegel herum dementsprechend nach außen gewandert ist, so dass jetzt der gesamte Überwachungsbereich 108 bestrahlt wird.

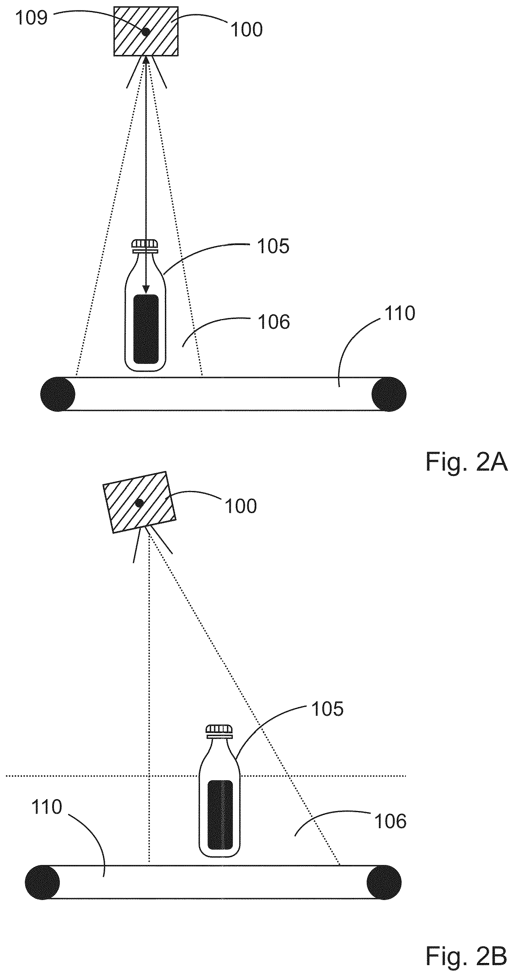

Fig. 2A zeigt ein Radarmessgerät 100 mit einer schwenkbaren Planarantenne, die sich um die mechanische Achse 109 drehen lässt. Das Radarmessgerät 100 ist in dieser Ausführungsform beispielsweise zur Überwachung von Objekten auf einem Förderband 110 eingerichtet. Bei den Objekten handelt es sich beispielsweise um Flaschen, anderweitige Konsumgüter oder Herstellungsgüter in einer Fabrik, einem Freifeld oder einer Lagerhalle.

Ändert sich die Position des Objekts 105, wird der Sicherheitsbereich über die Neigung des Radarmessgeräts 100 automatisch nachgeführt, wie dies in Fig. 2B zu sehen ist.

Auch kann eine Kombination aus elektronischer Strahlsteuerung und mechanischer Strahlsteuerung vorgesehen sein.

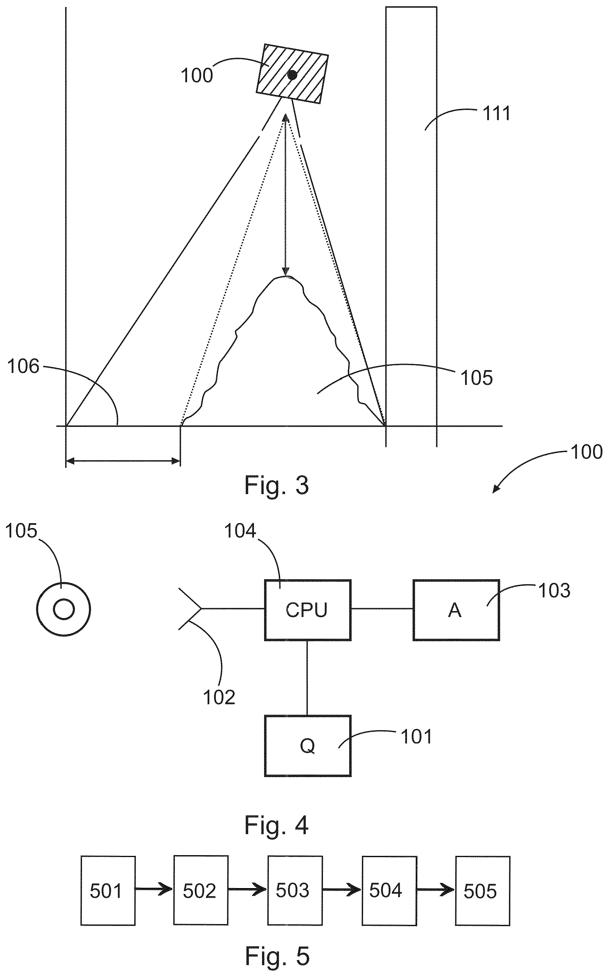

Fig. 3 zeigt eine weitere Anwendung im Bereich der Schüttgutmessung. Ändert sich die Ausdehnung des Schüttguts 105 bis an den Rand 111 des Überwachungsbereichs, kann der Überwachungsbereich beispielsweise über die Neigung des Radarmessgeräts 100 automatisch vergrößert werden, so dass der bestrahlte Überwachungsbereich nicht über den Rand 111 (hierbei handelt es sich beispielsweise um eine Wand) hinausgeht.

Fig. 4 zeigt ein Radarmessgerät 100 gemäß einer Ausführungsform. Das Radarmessgerät 100 weist eine Steuerung 104 beispielsweise in Form einer Steuerschaltung (CPU) auf, an welche eine Auswerteeinheit 103 und eine Radarsignalquelle 101 angeschlossen ist. Das von der Radarsignalquelle 101 erzeugte Radar-Sendesignal kann über die Antenne 102 in Richtung des zu überwachenden Objekts 105 abgestrahlt werden.

Fig. 5 zeigt ein Flussdiagramm eines Verfahrens gemäß einer Ausführungsform. In Schritt 501 wird ein Radar-Sendesignal erzeugt und in Schritt 502 in Richtung des zu überwachenden Objekts abgestrahlt. Das reflektierte Signal wird vom Messgerät im Schritt 503 empfangen und in Schritt 504 ausgewertet. Auf Basis dieser Auswertung werden Richtung und/oder Öffnungswinkel des abgestrahlten Radar-Sendesignals derart eingestellt (Schritt 505), dass der Sicherheitsbereich um das zu überwachende Objekt herum vollständig bestrahlt wird, ein Bereich darüber hinaus jedoch nicht.

Somit ist es möglich, ein Objekt zu überwachen bzw. einen Füllstand zu messen und gleichzeitig den Sicherheitsbereich um das Objekt herum zu überwachen. Die Größe des Sicherheitsbereichs kann automatisch abhängig von Zustand (Befüllungszustand, Lage, Geschwindigkeit) des zu messenden Mediums geändert werden, so dass um das zu messende Medium immer ein ausreichender Sicherheitsbereich (vorzugsweise jedoch kein darüberhinausgehender Bereich) bestrahlt wird, auch wenn sich das Medium schnell vergrößert, verkleinert und/oder bewegt.

Weitere Sicherheitsbereichsüberwachungssensoren sind nicht notwendig. Der Sicherheitsbereich passt sich den Ausdehnungsänderungen des zu messenden Mediums automatisch an. Der notwendige Flächenverbrauch für den Sicherheitsbereich wird auf das Minimum reduziert. Die Anzahl der Fehlerquellen oder Störungen des Prozesses werden reduziert und ermöglichen so einen reibungsloseren, stabileren Ablauf des Prozesses. Mithilfe der Radar- (zum Beispiel 240 GHz Sendefrequenz) oder Ultraschalltechnologie kann das Medium dreidimensional erfasst werden und somit eindeutig vom Sicherheitsbereich abgegrenzt werden.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Radarmessgerät (100), eingerichtet zur Prozessautomatisierung im industriellen Umfeld mit integrierter Sicherheitsbereichsüberwachung, aufweisend:
eine Radarsignalquelle (101, 102), eingerichtet zum Erzeugen und Abstrahlen eines Radar-Sendesignals in Richtung eines zu überwachenden Objekts (105), so dass das Objekt und auch ein Sicherheitsbereich (106), der sich um das Objekt herum erstreckt, bestrahlt wird;
eine Auswerteeinheit (103), eingerichtet zum Auswerten des von dem Objekt und dem Sicherheitsbereich reflektierten und von dem Radarmessgerät empfangenen Radar-Sendesignals;
eine Steuerung (104), eingerichtet zum Einstellen der Richtung des abgestrahlten Radar-Sendesignals derart, dass der Sicherheitsbereich um das Objekt herum auch bei einer Bewegung des Objekts vollständig bestrahlt wird;
wobei die Steuerung (104) eingerichtet ist, durch Einstellung der Richtung und/oder des Öffnungswinkels des abgestrahlten Radar-Sendesignals zu verhindern, dass ein Bereich außerhalb des Sicherheitsbereichs bestrahlt wird;
wobei das Radarmessgerät (100) zum Aussenden und Empfangen des Radar-Sendesignals eine schwenkbare Planarantenne (102) zur mechanischen Strahlsteuerung aufweist;
wobei die Steuerung (104) eingerichtet ist, den Sicherheitsbereich über die Neigung des Radarmessgeräts (100) automatisch nachzuführen, wenn sich die Position des Objekts (105) ändert.

2. Radarmessgerät (100) nach Anspruch 1,
wobei die Steuerung (104) eingerichtet ist zum Einstellen der Richtung und des Öffnungswinkels des abgestrahlten Radar-Sendesignals derart, dass der Sicherheitsbereich um das Objekt herum auch bei einer Bewegung des Objekts vollständig bestrahlt wird.

3. Radarmessgerät (100) nach einem der vorhergehenden Ansprüche,
wobei die Bewegung des Objekts (105) eine Translation, eine Vergrößerung oder eine Verkleinerung des Objekts umfasst.

4. Radarmessgerät (100) nach einem der vorhergehenden Ansprüche,
wobei es sich bei dem Objekt (105) um ein Füllgut oder ein Schüttgut handelt.

5. Radarmessgerät (100) nach einem der vorhergehenden Ansprüche,
wobei das Radarmessgerät (100) zum Aussenden und Empfangen des Radar-Sendesignals eine Planarantenne (102) mit elektronischer Strahlsteuerung aufweist.

6. Radarmessgerät (100) nach einem der vorhergehenden Ansprüche, ausgeführt als Füllstandmessgerät oder Grenzstandsensor.

7. Radarmessgerät (100) nach einem der vorhergehenden Ansprüche,
wobei die Steuerung (104) eingerichtet ist, die Richtung und/oder den Öffnungswinkel des abgestrahlten Radar-Sendesignals in Abhängigkeit von einer Geschwindigkeit des zu überwachenden Objekts einzustellen.

8. Radarmessgerät (100) nach einem der vorhergehenden Ansprüche,
wobei die Steuerung (104) eingerichtet ist, ein Förderband oder einen Roboter zu steuern, wenn ein Objekt im Sicherheitsbereich detektiert wird.

9. Verwendung eines Radarmessgeräts (100) nach einem der Ansprüche 1 bis 8 zur Objektüberwachung auf einem Förderband, zur Kollisionsüberwachung um bewegten Einrichtungen, wie z.B. Krane, Roboter, Förderrohre, Förderrutschen oder autonom frei fahrende bzw. geführte Einheiten sowie in und um ortsfeste Einrichtungen wie z.B. Silos, Tanks oder Abwurftrichter.

10. Verfahren zur Prozessautomatisierung im industriellen Umfeld mit Sicherheitsbereichsüberwachung, aufweisend die Schritte:
Erzeugen und Abstrahlen eines Radar-Sendesignals in Richtung eines zu überwachenden Objekts (105), so dass das Objekt und auch ein Sicherheitsbereich (106), der sich um das Objekt herum erstreckt, bestrahlt wird;
Auswerten des von dem Objekt und dem Sicherheitsbereich reflektierten und von dem Radarmessgerät empfangenen Radar-Sendesignals;
Einstellen der Richtung und/oder des Öffnungswinkels des abgestrahlten Radar-Sendesignals derart, dass der Sicherheitsbereich um das Objekt herum auch bei einer Bewegung des Objekts vollständig bestrahlt wird, um zu verhindern, dass ein Bereich außerhalb des Sicherheitsbereichs bestrahlt wird:
automatisches Nachführen des Sicherheitsbereiches über die Neigung des Radarmessgeräts (100), wenn sich die Position des Objekts (105) ändert;
wobei das Radarmessgerät (100) zum Aussenden und Empfangen des Radar-Sendesignals eine schwenkbare Planarantenne (102) zur mechischen Strahlsteuerung aufweist.

11. Programmelement, das, wenn es auf einer Steuerung (104) eines Radarmessgeräts (100) nach Anspruch 1 ausgeführt wird, das Radarmessgerät anleitet, das Verfahren nach Anspruch 10 durchzuführen.

12. Computerlesbares Medium, auf dem ein Programmelement nach Anspruch 11 gespeichert ist.

## Claims

1. Radar measuring device (100) configured for process automation in an industrial environment with integrated safety area monitoring, comprising:
a radar signal source (101, 102) configured to generate and emit a radar transmission signal in the direction of an object (105) to be monitored, so that the object and also a safety area (106) extending around the object are irradiated;
an evaluation unit (103) configured to evaluate the radar transmission signal reflected by the object and the safety area and received by the radar measuring device;
a controller (104) configured to adjust the direction of the emitted radar transmission signal such that the safety area around the object is completely irradiated even when the object moves;
wherein the controller (104) is configured to prevent irradiation of an area outside the safety area by adjusting the direction and/or the beam angle of the emitted radar transmission signal;
wherein the radar measuring device (100) comprises a swiveling planar antenna (102) for mechanical beam control for transmitting and receiving the radar transmission signal;
wherein the control (104) is configured to automatically track the safety area via the inclination of the radar measuring device (100) when the position of the object (105) changes.

2. Radar measuring device (100) according to claim 1,
wherein the control (104) is configured to adjust the direction and the opening angle of the emitted radar transmission signal such that the safety area around the object is completely irradiated even when the object moves.

3. Radar measuring device (100) according to one of the preceding claims,
wherein the movement of the object (105) comprises a translation, an enlargement, or a reduction of the object.

4. Radar measuring device (100) according to one of the preceding claims,
wherein the object (105) is a bulk material or a loose material.

5. Radar measuring device (100) according to one of the preceding claims,
wherein the radar measuring device (100) has a planar antenna (102) with electronic beam control for transmitting and receiving the radar transmission signal.

6. Radar measuring device (100) according to one of the preceding claims, configured as a level measuring device or limit level sensor.

7. Radar measuring device (100) according to one of the preceding claims,
wherein the control (104) is configured to adjust the direction and/or the beam angle of the emitted radar transmission signal as a function of a speed of the object to be monitored.

8. Radar measuring device (100) according to one of the preceding claims,
wherein the control (104) is configured to control a conveyor belt or a robot when an object is detected in the safety area.

9. Use of a radar measuring device (100) according to one of claims 1 to 8 for object monitoring on a conveyor belt, for collision monitoring around moving equipment such as cranes, robots, conveyor pipes, conveyor chutes or autonomous free-moving or guided units, and in and around stationary equipment such as silos, tanks or discharge hoppers.

10. Method for process automation in an industrial environment with safety area monitoring, comprising the steps:
Generating and emitting a radar transmission signal in the direction of an object (105) to be monitored, so that the object and also a safety area (106) extending around the object are irradiated;
Evaluating the radar transmission signal reflected by the object and the safety area and received by the radar measuring device;
Adjusting the direction and/or the opening angle of the emitted radar transmission signal in such a way that the safety area around the object is completely irradiated even when the object moves, in order to prevent an area outside the safety area from being irradiated;
Automatically tracking the safety area via the inclination of the radar measuring device (100) when the position of the object (105) changes;
wherein the radar measuring device (100) has a swiveling planar antenna (102) for mechanical beam control for transmitting and receiving the radar transmission signal.

11. Program element which, when executed on a controller (104) of a radar measuring device (100) according to claim 1, instructs the radar measuring device to perform the method according to claim 10.

12. Computer-readable medium on which a program element according to claim 11 is stored.

## Revendications

1. Appareil de mesure radar (100) configuré pour l'automatisation de processus en environnement industriel avec surveillance de zone de sécurité intégrée, comportant :
une source de signal radar (101, 102) configurée pour générer et émettre un signal de transmission radar en direction d'un objet à surveiller (105), de telle sorte que l'objet ainsi qu'une zone de sécurité (106) qui s'étend autour de l'objet est irradié(e) ;
une unité d'évaluation (103) configurée pour évaluer le signal de transmission radar réfléchi par l'objet et la zone de sécurité et reçu par l'appareil de mesure radar ;
une commande (104) configurée pour régler la direction du signal de transmission radar émis, de telle sorte que la zone de sécurité autour de l'objet est entièrement irradiée, même en cas de mouvement de l'objet ;
dans lequel la commande (104) est configurée pour empêcher qu'une zone située à l'extérieur de la zone de sécurité soit irradiée en réglant la direction et/ou l'angle d'ouverture du signal de transmission radar émis ;
dans lequel l'appareil de mesure radar (100) comporte une antenne plane pivotante (102) pour la commande de faisceau mécanique afin d'émettre et de recevoir le signal de transmission radar ;
dans lequel la commande (104) est configurée pour suivre automatiquement la zone de sécurité par l'inclinaison de l'appareil de mesure radar (100) lorsque la position de l'objet (105) change.

2. Appareil de mesure radar (100) selon la revendication 1,
dans lequel la commande (104) est configurée pour régler la direction et l'angle d'ouverture du signal de transmission radar émis, de telle sorte que la zone de sécurité autour de l'objet est entièrement irradiée, même en cas de mouvement de l'objet.

3. Appareil de mesure radar (100) selon l'une des revendications précédentes,
dans lequel le mouvement de l'objet (105) comprend une translation, un agrandissement ou une réduction de l'objet.

4. Appareil de mesure radar (100) selon l'une des revendications précédentes,
dans lequel l'objet (105) est un matériau de remplissage ou un matériau en vrac.

5. Appareil de mesure radar (100) selon l'une des revendications précédentes,
dans lequel l'appareil de mesure radar (100) comporte une antenne plane (102) avec une commande de faisceau électronique afin d'émettre et de recevoir le signal de transmission radar.

6. Appareil de mesure radar (100) selon l'une des revendications précédentes, mis en œuvre sous la forme d'un appareil de mesure de niveau de remplissage ou d'un capteur de niveau de seuil.

7. Appareil de mesure radar (100) selon l'une des revendications précédentes,
dans lequel la commande (104) est configurée pour régler la direction et/ou l'angle d'ouverture du signal de transmission radar émis en fonction d'une vitesse de l'objet à surveiller.

8. Appareil de mesure radar (100) selon l'une des revendications précédentes,
dans lequel la commande (104) est configurée pour commander une bande de convoyage ou un robot lorsqu'un objet est détecté dans la zone de sécurité.

9. Utilisation d'un appareil de mesure radar (100) selon l'une des revendications 1 à 8 pour la surveillance d'objets sur une bande de convoyage, pour la surveillance de collisions autour de dispositifs en mouvement tels que des grues, des robots, des tuyaux de transport, des goulottes de transport ou des unités autonomes se déplaçant librement ou guidées, ainsi que dans et autour de dispositifs fixes tels que des silos, des réservoirs ou des trémies de décharge.

10. Procédé d'automatisation de processus en environnement industriel avec surveillance de zone de sécurité, comportant les étapes consistant à :
générer et émettre un signal de transmission radar en direction d'un objet à surveiller (105), de telle sorte que l'objet ainsi qu'une zone de sécurité (106) qui s'étend autour de l'objet est irradié(e);
évaluer le signal de transmission radar réfléchi par l'objet et la zone de sécurité et reçu par l'appareil de mesure radar ;
régler la direction et/ou l'angle d'ouverture du signal de transmission radar émis, de telle sorte que la zone de sécurité autour de l'objet est entièrement irradiée, même en cas de mouvement de l'objet, afin d'éviter qu'une zone située à l'extérieur à la zone de sécurité ne soit irradiée ;
suivre automatiquement la zone de sécurité par l'inclinaison de l'appareil de mesure radar (100) lorsque la position de l'objet (105) change ;
dans lequel l'appareil de mesure radar (100) comporte une antenne plane pivotante (102) pour la commande de faisceau mécanique afin d'émettre et de recevoir le signal de transmission radar.

11. Élément de programme qui, lorsqu'il est exécuté sur une commande (104) d'un appareil de mesure radar (100) selon la revendication 1, amène l'appareil de mesure radar à mettre en œuvre le procédé selon la revendication 10.

12. Support lisible par ordinateur sur lequel est stocké un élément de programme selon la revendication 11.
